Europäisches Patentamt

European Patent Office

Office européen des brevets

(19)

(11) Numéro de publication: **0 161 996**
**B1**

(12) **FASCICULE DE BREVET EUROPEEN**

(45) Date de publication du fascicule du brevet:
14.09.88

(51) Int. Cl.⁴: **G 01 P 3/80, G 06 F 15/336**

(21) Numéro de dépôt: **85420060.7**

(22) Date de dépôt: **27.03.85**

(54) Procédé et dispositif de mesure par corrélation, en temps réel, de retards entre des signaux électriques statistiquement semblables.

(30) Priorité: **28.03.84 FR 8405122**

(43) Date de publication de la demande:
**21.11.85 Bulletin 85/47**

(45) Mention de la délivrance du brevet:
**14.09.88 Bulletin 88/37**

(84) Etats contractants désignés:
**AT BE CH DE FR GB IT LI LU NL SE**

(56) Documents cités:
**EP - A - 0 026 877**
**EP - A - 0 065 906**
**DE - A - 2 544 821**
**DE - A - 2 633 565**
**FR - A - 2 206 872**
**GB - A - 2 011 621**

(73) Titulaire: **CENTRE NATIONAL DE LA RECHERCHE SCIENTIFIQUE (CNRS), 15, Quai Anatole France, F-75007 Paris (FR)**
Titulaire: **CENTRE TECHNIQUE DE L'INDUSTRIE DES PAPIERS, CARTONS ET CELLULOSES C.T.P., Domaine Universitaire, F-38400 Saint Martin D'Heres (FR)**

(72) Inventeur: **Moisan, Eric, 20, Boulevard Joseph Vallier, F-38000 Grenoble (FR)**
Inventeur: **Henrioux, Jean-Paul, No. 6, Domaine des Plantées, F-38330 Biviers (FR)**
Inventeur: **Galet, Philippe, Chemin du Coubeau, F-38690 Le Grand Lemps (FR)**

(74) Mandataire: **Ropital-Bonvarlet, Claude et al, Cabinet BEAU DE LOMENIE 99, Grande rue de la Guillotière, F-69007 Lyon (FR)**

## Description

La présente invention concerne le domaine technique de la mesure, par corrélation, de retards entre deux signaux statistiquement semblables.

Cette technique de mesure est une méthode bien connue. Elle consiste à prélever deux signaux électriques en deux points situés respectivement à une distance fixe déterminée d'un milieu mobile à surface non homogène.

L'un des signaux est prélevé en un premier point et stocké dans une voie à retard, alors que le second signal est prélevé au second point et acheminé sur une voie de traitement directe. La méthode consiste, ensuite, à rechercher dans la collection de la voie retardée le signal premier ayant le degré de ressemblance avec le signal second, pour permettre une mesure de retard par corrélation. Cette mesure permet, en fonction de l'écart entre les deux points de prélèvement, de déterminer la vitesse d'un mobile et/ou la longueur ayant défilé entre les deux points pendant une unité de temps.

La méthode de mesure fait intervenir le calcul de la fonction de corrélation entre des signaux échantillonnés à une fréquence identique pour la voie retardée et la voie directe, et la détermination du retard correspondant au maximum ou pic de cette fonction.

Le principe de cette technique peut être considéré comme bien connu et accessible par de nombreuses publications pour l'homme de l'art, sans qu'il soit nécessaire d'en effectuer un rappel plus précis pour la bonne compréhension de l'objet de l'invention.

Pour assumer cette fonction, la technique antérieure connaît des appareils de corrélation à caractère scientifique qui permettent d'obtenir des fonctions d'intercorrélation. Cependant, ces appareils sont souvent d'un emploi complexe et ne donnent pas une lecture directe du retard lié à l'écard temporel séparant deux signaux statistiquement semblables.

Le brevet français 2 206 872 enseigne que la fonction de corrélation peut être calculée à partir de la seule polarité des signaux prélevés. Selon ce brevet français, il apparaît que la position du pic d'intercorrélation significatif du retard entre deux signaux statistiquement semblables, donne une estimation non biaisée du retard, uniquement dans le cas de signaux stationnaires.

On connaît, par ailleurs, une autre famille de dispositifs de corrélation dits à retard asservi ou à fréquence d'échantillonnage asservie. Ces dispositifs ne calculent la fonction d'intercorrélation qu'en son point maximal et possèdent l'inconvénient de s'asservir sur des pics parasites, non significatifs de la fonction d'intercorrélation.

La demande de brevet européen 0 026 877 décrit un appareil de corrélation à caractère industriel, mettant en œuvre la technique de coïncidence de polarité. Un tel appareil comprend un microprocesseur ne calculant qu'une partie de la fonction de corrélation approchée et détectant la position du pic pour calculer et afficher la valeur du retard à mesurer. Cet appareil met en œuvre une fenêtre d'analyse contrôlée et une fréquence d'échantillonnage préprogrammée. Cependant, un tel appareil possède un temps de mesure relativement long, de l'ordre de la seconde, et ne peut donc être mis en œuvre pour mesurer des retards ayant la particularité de varier rapidement et sur une plage importante.

Lorsque la gamme de retards à mesurer est faible, il est connu qu'il suffit de ne calculer qu'une partie de la fonction d'intercorrélation. Ceci permet de limiter le nombre de points à calculer pendant une période d'échantillonnage et, par suite, de limiter la taille de la mémoire d'accumulation. Il en résulte une réduction de la puissance de calcul nécessaire au travail en temps réel, ainsi qu'une diminution des risques d'erreurs de détection de pics.

Si avec de tels moyens il est souhaité exploiter une gamme importante de retards, il est possible de déplacer la fenêtre à l'intérieur de laquelle est calculée la fonction d'intercorrélation, comme cela est enseigné par la demande européenne 0 026 877.

Pour limiter la taille de la mémoire de la voie retardée, on peut prévoir un sous-échantillonnage pour l'une des deux voies comme dans la demande européenne 0 026 877. Cette méthode a l'inconvénient d'être lente.

On connaît aussi, dans le même but, par le brevet anglais 1 566 181, la mise en œuvre de plusieurs fréquences d'échantillonnage parmi lesquelles une est à chaque fois en service en fonction du retard à mesurer. Cette méthode présente l'inconvénient de créer un régime transitoire non exploitable à chaque changement de fréquence, car il est nécessaire d'attendre le chargement du registre de la voie retardée avec les échantillons prélevés à la nouvelle fréquence avant de calculer la fonction d'intercorrélation.

La mise en œuvre des méthodes ci-dessus permet, à la fois, une économie de matériel et un gain en rapidité de calcul. Cependant, ces moyens ne sont pas suffisants lorsqu'il convient de mesurer des retards variant rapidement et sur de plages importantes, c'est-à-dire lorsque les mesures à effectuer intéressent des signaux prélevés à partir d'un mobile connaissant des accélérations et des décélérations brutales.

Les procédés et appareils du type ci-dessus ne peuvent donc pas être pratiquement utilisés pour mesurer les vitesses et/ou longueurs de défilement de produits industriels fabriqués en continu, tels qu'une feuille de papier, un fil métallique ou, encore, l'appréciation des déplacements dans le domaine du transport par rail ou par câble. Dans tous ces cas, les accélérations et décélérations peuvent être considérées comme importantes et, par suite, les signaux prélevés n'offrent pas un caractère suffisamment stationnaire pour être traités par les moyens connus.

On connaît encore la demande EP-A 0 065 906 concernant un dispositif pour la détermination de la vitesse d'un produit en défilement. Le préambule de la revendication 1, concernant le procédé revendiqué, s'appuie sur le procédé connu de ce document.

Selon cette publication, le dispositif a recours à deux corrélateurs dénommés «maître» et «esclave», ce dernier étant asservi au premier pour assurer un fonctionnement en continu. Le corrélateur esclave sert à la mesure de la vitesse et le corrélateur maître ou de veille sert au rattrapage de la vitesse lorsque, après une variation de vitesse trop rapide, le corrélateur de mesure a décroché.

Un tel dispositif, incluant la présence de deux corrélateurs asservis, est onéreux et ne possède pas d'autre faculté d'adaptation que la capacité de rattrapage du second corrélateur.

Une adaptation à des gammes de variation de vitesse importante ne peut être obtenue sans mettre en œuvre des moyens techniques complexes et coûteux.

La présente invention vise à remédier à cette impossibilité en proposant un procédé et un dispositif particulièrement conçu pour mesurer, par lecture directe, mais sans contact physique, des variations de défilement d'un produit à surface non homogène, entraîné en déplacement par rapport à une tête de mesure et conformément à la méthode revendiquée.

L'objet de l'invention est de permettre la mesure de retards entre deux signaux statistiquement semblables en faisant intervenir une technique de calcul de fonction de corrélation prenant en compte des variations dans le temps pouvant s'étaler sur une grande plage.

Pour atteindre l'objectif ci-dessus, le procédé de mesure par corrélation selon la revendication 1 est caractérisé en ce qu'on:
- prévoit n voies retardées parallèles indépendantes associées au premier capteur de prélèvement du premier signal, n étant égal ou supérieur à deux,
- stocke dans ces voies des échantillons du signal prélevés à n fréquences d'échantillonnage différentes,
- prélève des échantillons du deuxième signal émis par le deuxième capteur, par la voie directe selon l'une des n fréquences,
- et calcule la fonction de corrélation entre les échantillons de la voie directe et les échantillons de l'une des voies retardées, selon la valeur du retard mesuré.

L'invention vise, également, à titre de produit industriel nouveau, un dispositif de mesure par corrélation selon la revendication 8 et comprenant:
- n voies de stockage retardé associées au premier capteur, n étant égal ou supérieur à deux,
- un générateur de n fréquences d'échantillonnage différentes appliquées simultanément chacune à une des voies retardées,
- des moyens de synchronisation pour appliquer à la voie directe la fréquence d'échantillonnage de l'une des voies retardées,
- des moyens de commutation pour appliquer à l'une des entrées du module multiplicateur les échantillons stockés dans l'une des voies retardées,
- et un comparateur de données programmé ayant une entrée reliée à la sortie du détecteur de pic et des sorties commandant les moyens de synchronisation, les moyens de commutation, ainsi que le calcul de la fonction de corrélation.

Diverses autres particularités ressortent de la description faite ci-dessous en référence aux dessins annexés qui montrent des formes de réalisation de l'objet de l'invention.

La fig. 1 est une vue schématique du dispositif conforme à l'invention.

La fig. 2 est un diagramme illustrant une caractéristique de l'objet de l'invention.

La fig. 3 est un schéma, analogue à la fig. 1, mais illustrant une variante de réalisation de certains des éléments constitutifs de l'objet de l'invention.

La fig. 4 est un diagramme mettant en évidence une caractéristique fonctionnelle de l'invention.

La fig. 5 et un schéma partiel faisant apparaître une variante de réalisation de l'objet de l'invention.

La fig. 6 est un schéma analogue à la fig. 4 et faisant apparaître un avantage de l'invention.

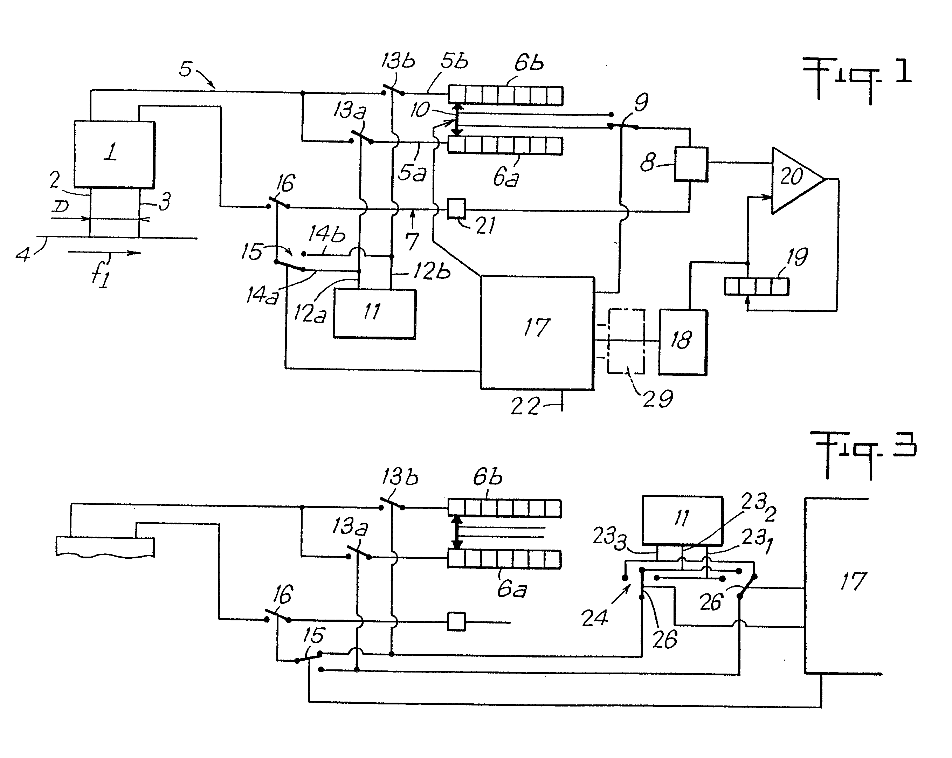

L'objectif de l'invention est de pouvoir apprécier, sensiblement en temps réel, des retards $\tau$ variant rapidement entre des signaux statistiquement semblables prélevés à partir de deux faisceaux rétrodiffusés par un mobile 4 défilant devant deux sources d'émission de faisceaux incidents 2, 3, parallèles entre eux, placés dans un même plan et séparés par une distance connue D (fig. 1).

Pour mesurer avec précision et en temps réel des variations brutales de retard $\tau$, il importe, selon les moyens actuels, de choisir une fréquence d'échantillonnage telle que la période d'échantillonnage des signaux rétrodiffusés soit inférieure à la résolution souhaitée sur le retard le plus faible à mesurer et de calculer, très rapidement, la fonction de corrélation $(\tau)$. Cependant, si la plage de variation du retard est grande, le choix d'une telle fréquence d'échantillonnage implique le calcul d'un très grand nombre de points de retards, ce qui est incompatible avec l'objectif de rapidité visé.

Pour régler ce problème, l'invention préconise de réaliser un appareil comprenant une tête de mesure 1, de type connu, comportant un premier capteur de mesure 2 et un second capteur de mesure 3, par exemple du type optique, dirigés perpendiculairement sur le mobile 4 entraîné en défilement dans le sens de la flèche $f_1$. Les capteurs 2 et 3 constituent aussi, de préférence, des émetteurs de faisceaux incidents et sont situés dans un même plan perpendiculairement au mobile 4 en étant séparés par une distance fixe connue D.

Selon l'invention, les signaux optiques rétrodiffusés captés par le premier capteur 2 sont transformés électriquement et sont dirigés vers une voie 5, dite retardée, comprenant au moins deux lignes 5a et 5b menant à des registres à décalage 6a et 6b chargés de stocker successivement les échantillons prélevés à partir du signal rétrodiffusé.

Les échantillons issus du second capteur 3, à partir du signal second rétrodiffusé, sont dirigés vers une voie de mesure 7, dite directe, aboutissant à un module multiplicateur 8 auquel aboutit également la sortie d'un commutateur 9 susceptible de relier le module multiplicateur à l'un ou à l'autre des registres 6a ou 6b par l'intermédiaire d'au moins un pointeur 10.

Selon l'invention, l'appareil comprend un générateur 11 émettant par deux sorties 12a et 12b deux fréquences d'échantillonnage appliquées à des échantillonneurs 13a et 13b appartenant aux voies 5a et 5b. Les deux sorties 12a et 12b comportent deux branches de dérivation 14a et 14b pouvant être mises en relation, indépendamment l'une de l'autre, par des moyens de synchronisation 15 avec un échantillonneur 16 situé sur la voie directe 7.

Le dispositif comprend, également, un comparateur de données 17 programmé possédant trois sorties commandant, respectivement, le commutateur 9, la plage à explorer par le pointeur 10 et les moyens de synchronisation 15. Le comparateur 17 possède une entrée reliée à un détecteur de pic 18 branché à la sortie d'une mémoire 19 de stockage temporaire de la fonction de corrélation, alimentée par la sortie d'un module additionneur 20 dont l'une des entrées est reliée à la sortie du module 8. L'autre entrée de l'additionneur 20 est établie en boucle sur la mémoire 19, de manière à prendre en charge, pour chaque information, la somme de la mesure précédemment réalisée additionnée de celle fournie par le module multiplicateur 8.

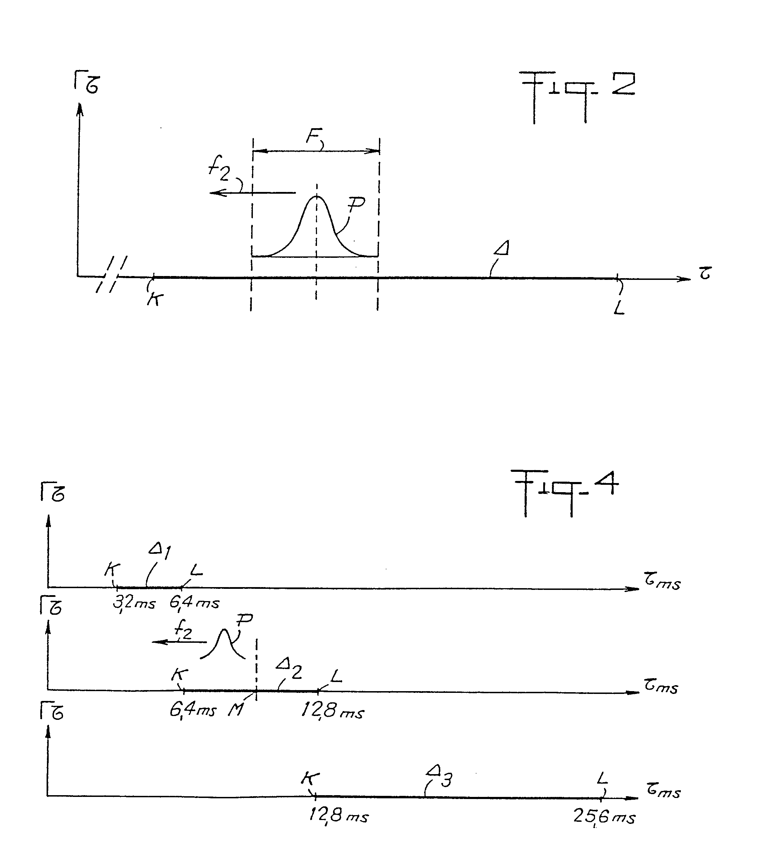

A titre d'exemple, si la plage de retard à mesurer s'étend de 3,2 millisecondes à 12,8 millisecondes et si la résolution souhaitée est de un pour mille, il est nécessaire de faire intervenir une période d'échantillonnage inférieure ou égale à 3,2 microsecondes. Si cette période est unique, ceci impose de faire le calcul de la fonction de corrélation entre le millième point et le quatre millième point. Si, pour réduire la capacité des registres, on limite l'excursion du pic de la fonction de corrélation entre approximativement le millième point (K) et le deux millième point (L) (fig. 2), on ne peut mesurer que les retards compris entre 3,2 et 6,4 millisecondes. Pour mesurer les retards compris entre 6,4 et 12,8 millisecondes, il est nécessaire de choisir une seconde période d'échantillonnage. Pour cela, selon l'invention, le générateur 11 est choisi pour émettre différentes fréquences d'échantillonnage satisfaisant à cette continuité de mesure de retard.

Les registres à décalage 6a et 6b sont chargés en parallèle avec des échantillons prélevés à des fréquences différentes à partir du même signal rétrodiffusé.

Le comparateur de données 17 est réalisé pour apprécier la position du pic de la fonction de corrélation calculée par la chaîne 6, 21, 9, 8, 20 et 19.

A supposer que ce pic soit apprécié par la mesure précédente comme se situant dans une plage de retards pouvant être couverte par la plus faible fréquence d'échantillonnage, le comparateur 17 commande les moyens de synchronisation 15, de manière à appliquer à l'échantillonneur 16 la fréquence la plus faible, par exemple, celle faisant intervenir une période d'échantillonnage de 6,4 microsecondes et délivrée par la sortie 12a.

La voie directe 7 reçoit ainsi les échantillons issus du capteur 3, à la même fréquence que la ligne 5a de la voie 5 stockant les échantillons successifs dans le registre 6a.

Simultanément, le comparateur de données 17 commande le commutateur 9 pour établir la liaison entre le module multiplicateur 8 et le pointeur 10 en relation avec la mémoire 6a.

Les échantillons de la ligne 5a en service et ceux transitant par la voie 7 sont traités de manière connue par la chaîne 6, 9, 8, 20 et 19 pour calculer la fonction de corrélation. Le détecteur 18 recherche l'amplitude maximale ou pic de la fonction de corrélation et la transmet au comparateur de données 17. La programmation conférée au comparateur lui permet d'apprécier si le pic de corrélation ainsi détecté se situe toujours de façon compatible dans la plage utile déterminée par la fréquence d'échantillonnage choisie.

A supposer que le retard tende à se réduire, alors que la période d'échantillonnage utilisée est de 6,4 microsecondes, ceci correspond à une accélération du mobile 4 et à un déplacement du pic P (fig. 2) de la fonction de corrélation dans le sens de la flèche $f_2$. A partir du moment où le déplacement du pic P risque de dépasser le point K, le comparateur de données 17 commande les moyens de synchronisation 15 pour appliquer à l'échantillonneur 16 la seconde fréquence fournie par la sortie 12b et déjà appliquée à la ligne retardée 5b qui était la ligne en attente. Simultanément, le commutateur 9 est commandé par le comparateur de données 17, de manière à établir la liaison entre le module de multiplication 8 et le pointeur 10, en relation avec le registre 6b de la ligne 5b qui devient la ligne en service.

Etant donné que le registre 6b a été chargé de façon parallèle avec des échantillons prélevés à partir de la même information rétrodiffusée, mais avec l'autre fréquence d'échantillonnage, le calcul de la fonction de corrélation peut s'effectuer sans attendre le renouvellement du contenu du registre à décalage en service. Il devient ainsi possible de mesurer en temps réel des retards variant rapidement, car le comparateur commande la mise en service actif de l'une ou l'autre des lignes retardées 5a ou 5b en fonction de la valeur du retard précédemment mesuré.

Pour réduire le temps de mesure et obtenir une appréciation plus rapide encore des retards qui varient, le calcul de la fonction de corrélation n'est effectué qu'au voisinage du pic P.

Le comparateur de connées 17 est programmé pour limiter à une fenêtre F (fig. 2) l'excursion du pointeur 10 assurant l'alimentation de la chaîne de calcul. Cette fenêtre F est placée de telle façon que le pic P soit centré par rapport à celle-ci. A cet effet, le comparateur de données 17 ajuste, pour chaque mesure à effectuer, la position de la fenêtre F pour la centrer sur le pic de la mesure précédente. Une variante consiste à asservir la position de la fenêtre F par anticipation en incorporant dans la chaîne de calcul entre le comparateur 17 et le détecteur 18 un filtre prédicteur 29, tel qu'un filtre de KALMAN, représenté en traits mixtes à la fig. 1. Dans un tel cas, le filtre 29 reçoit du détecteur 18 l'information d'estimation du retard et transmet au comparateur 17 les informations de vitesse et accélération.

Ceci permet de disposer d'un appareil rapide et précis permettant de mesurer en temps réel des variations de retard brutales pouvant s'échelonner sur une plage importante.

Le comparateur de données 17 possède une quatrième sortie 22 destinée à alimenter un module de calcul et d'affichage de données ou paramètres en relation avec le retard mesuré. A titre d'exemple, un tel module d'affichage peut faire apparaître la vitesse de défilement du mobile 4 et/ou la mesure linéaire de son défilement et/ou son accélération.

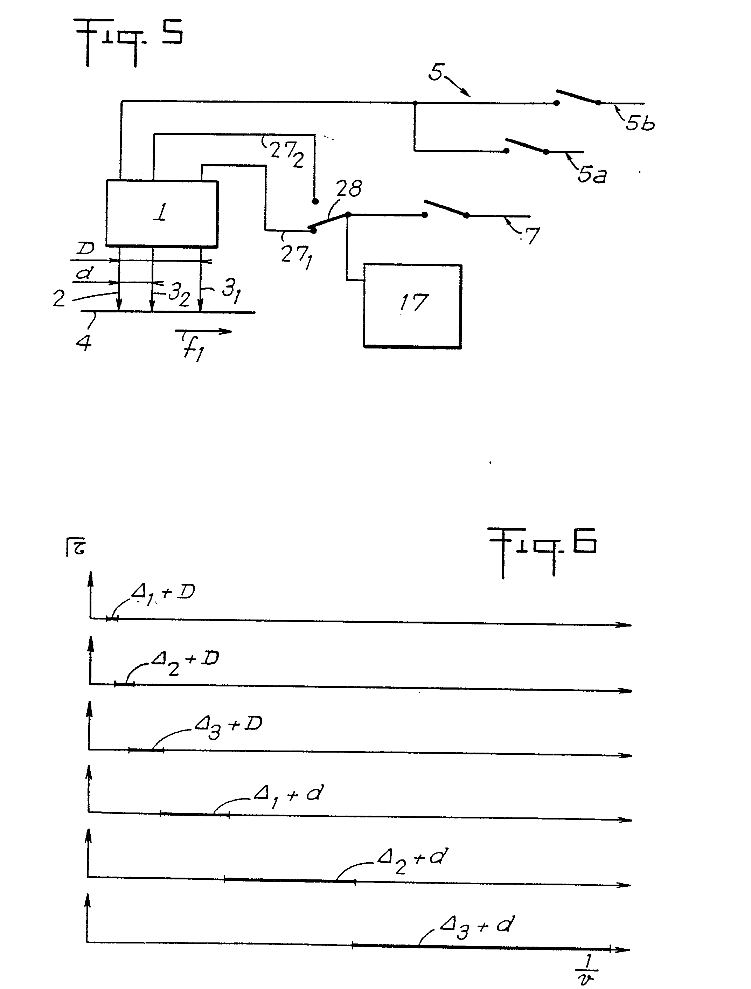

Dans certaines applications, les plages de retard peuvent être très importantes. Le stockage d'échantillons prélevés à deux fréquences d'échantillonnage différentes peut, dans certains cas, s'avérer insuffisant. La fig. 3 montre une variante de réalisation dans laquelle le générateur 11 possède trois sorties $23_1$, $23_2$, $23_3$ délivrant trois périodes d'échantillonnage différentes $\Delta_1$, $\Delta_2$ et $\Delta_3$, telles que schématisées à la fig. 4. En relation avec l'exemple décrit précédemment, la troisième fréquence peut, par exemple, être choisie pour faire intervenir une période d'échantillonnage de 12,8 microsecondes pour couvrir une plage totale de retard allant de 3,2 millisecondes à 25,6 millisecondes. Dans un tel cas, le comparateur de données 17 est programmé pour appliquer, par un moyen de sélection 24 (fig. 3), toujours deux fréquences successives aux échantillonneurs 13a et 13b. Les moyens de sélection 24 sont, par exemple, au nombre de deux commutateurs 26 commandés par le comparateur de données 17 pour relier deux des trois sorties aux deux échantillonneurs 13a et 13b.

La commande des commutateurs 26 est effectuée par le comparateur 17, appréciant la position du pic P par rapport à un point de référence M, par exemple central égal $\frac{K+L}{2}$ de la plage de retard correspondant à $\Delta_2$. Ainsi, par référence à la fig. 4, si le pic P se décale selon la flèche $f_2$ à gauche du point M, le comparateur commande les commutateurs 26 pour délivrer à l'échantillonneur 13 de la voie en attente la fréquence correspondant à la période $\Delta_1$. Lorsque le pic P atteint le point K, le comparateur permute le rôle des deux voies retardées.

Il doit être considéré que, selon l'invention, les échantillons issus du premier capteur 2 sont dirigés sur une voie retardée pouvant comporter plus de deux lignes alimentées en parallèle en faisant intervenir autant de fréquences d'échantillonnage propres.

Dans certaines applications, les plages de retard peuvent connaître des limites très éloignées l'une de l'autre et la multiplication du nombre de fréquences d'échantillonnage peut alors conduire à un dispositif plus complexe et onéreux ou moins performant.

Pour remédier à cet inconvénient, il est prévu, selon l'invention, de réaliser la tête 1 de telle façon que le second capteur 3 puisse être situé à des distances différentes du premier capteur 2.

Selon la fig. 5, il peut être prévu de doter la tête 1 de deux capteurs $3_1$ et $3_2$ possédant chacun une ligne de sortie $27_1$ et $27_2$ pouvant être reliées par un commutateur 28 à la voie 7. Le commutateur 28 est commandé par le comparateur de données 17, de telle sorte que l'un ou l'autre des capteurs $3_1$, $3_2$ est rendu actif en fonction de la valeur du retard déterminée par l'appréciation de la position du pic P et de la fréquence d'échantillonnage en service. Ainsi, pour des retards, considérés comme compatibles avec, par exemple, les trois fréquences d'échantillonnage définies précédemment, le comparateur de données 17 maintient en serivce le capteur $3_1$ situé à une distance D du capteur premier 2. Dès que les retards croissent, en correspondance d'une décélération de la vitesse de défilement dans le sens de la flèche $f_1$, le comparateur 17 met en service le capteur $3_2$ situé a une distance d du premier capteur 2.

La fig. 6 illustre le cas de trois périodes d'échantillonnage $\Delta$ situées dans un rapport 2 et de deux distances D, d situées dans un rapport $2^3$. Dans cette figure, l'axe des abscisses correspond à l'inverse de la vitesse mesurable par opposition aux retards selon la fig. 4. L'examen de cette figure permet de constater que la combinaison des trois fréquences et des deux distances permet d'accroître notablement la plage totale de retards mesurables.

**Revendications**

1. Procédé de mesure par corrélation, en temps réel, des retards entre des signaux électriques statistiquement semblables, du type faisant intervenir le prélèvement, à une fréquence d'échantillonnage donnée, de la variation d'un premier signal fourni par un mobile défilant devant un premier capteur fixe, le stockage dans une voie retardée des échantillons ainsi prélevés, le prélèvement par une voie directe, à la même fréquence d'échantillonnage de la variation d'un deuxième signal fourni par le même mobile défilant devant au moins un deuxième capteur, fixe, situé à une distance déterminée du premier capteur, le calcul de la fonction de corrélation à partir des échantillons contenus dans les voies retardée et directe, la détermination de la position du pic de cette fonction et la mesure du retard entre les signaux statistiquement semblables, caractérisé en ce qu'on:

- prévoit n voies retardées parallèles indépendantes associées au premier capteur de prélèvement du premier signal, n étant égal ou supérieur à deux,

- stocke dans ces voies des échantillons du signal prélevés à n fréquences d'échantillonnage différentes,
- prélève des échantillons du deuxième signal émis par le deuxième capteur, par la voie directe selon l'une des n fréquences,
- et calcule la fonction de corrélation entre les échantillons de la voie directe et les échantillons de l'une des voies retardées, selon la valeur du retard mesuré.

2. Procédé selon la revendication 1, caractérisé en ce qu'on prend en compte la valeur du retard par un dispositif calculateur comparateur programmé, on synchronise par ce dispositif la fréquence d'échantillonnage de la voie directe avec la fréquence de l'une des voies retardées et on relie cette voie retardée synchronisée aux moyens de calcul de la fonction de corrélation.

3. Procédé selon la revendication 1 ou 2, caractérisé en ce qu'on prélève des échantillons du premier signal selon deux fréquences d'échantillonnage propres à deux voies retardées et choisies par le dispositif calculateur à partir d'au moins trois fréquences d'échantillonnage.

4. Procédé selon la revendication 2 ou 3, caractérisé en ce que le calcul de la fonction de corrélation est limité à une fenêtre de retard et en ce que cette fenêtre est centrée sur la position du pic de la fonction à calculer.

5. Procédé selon la revendication 4, caractérisé en ce que lors d'une mesure le centrage de la fenêtre est effectué par le dispositif calculateur à partir de la position du pic fournie par la mesure précédente.

6. Procédé selon la revendication 4, caractérisé en ce que le centrage de la fenêtre est effectué au moyen d'un filtre prédicteur.

7. Procédé selon la revendication 1, caractérisé en ce qu'on prélève la variation du deuxième signal à partir de l'un quelconque de plusieurs capteurs choisi par le dispositif calculateur en fonction de la valeur de retard mesurée.

8. Dispositif de mesure par corrélation en temps réel des retards entre des signaux statistiquement semblables, du type comprenant une tête (1) comportant, pour la mesure du défilement linéaire d'un mobile (4) un premier moyen d'émission d'un faisceau lumineux incident, un premier capteur (2) du faisceau rétrodiffusé par le mobile émettant un premier signal électrique, au moins un second moyen d'émission d'un faisceau lumineux incident, un second capteur (3) du faisceau rétrodiffusé par le mobile, émettant un second signal électrique et situé à distance connue du premier capteur, un générateur (11) d'échantillonnage des premier et second signaux électriques émis par les premier et second capteurs, une voie (5) de stockage des échantillons successifs issus du premier signal, une voie (7) de prise en compte directe, appelée ci-après voie directe, des échantillons successifs issus du second signal, un module (8) multiplicateur des échantillons, un module (20) additionneur alimentant une mémoire de stockage temporaire (19) et un détecteur de pic (18) de la fonction de corrélation calculée par les modules multiplicateur et additionneur, caractérisé en ce qu'il comprend:
- n voies (5a, 5b) de stockage retardé, appelées ci-après voies retardées, associées au premier capteur, n étant égal ou supérieur à deux,
- un générateur (11) de n fréquences d'échantillonnage différentes appliquées simultanément chacune à une des voies retardées (5a, 5b),
- des moyens (15) de synchronisation pour appliquer à la voie directe (7) la fréquence d'échantillonnage de l'une des voies retardées (5a, 5b),
- des moyens de commutation (9) pour appliquer à l'une des entrées du module multiplicateur (8) les échantillons stockés dans l'une des voies retardées (5a, 5b),
- et un comparateur de données programmé (17) ayant une entrée reliée à la sortie du détecteur de pic (18) et des sorties commandant les moyens de synchronisation (15), les moyens de commutation (9), ainsi que le calcul de la fonction de corrélation.

9. Dispositif selon la revendication 8, caractérisé en ce qu'il comprend un générateur (11) d'au moins trois fréquences, des moyens de sélection (24) pour appliquer deux successives de ces trois fréquences en même temps, chacune à une voie retardée (5a, 5b) et un comparateur programmé (17) analysant la position du pic de la fonction de corrélation et commandant des moyens (24) de sélection de deux fréquences d'échantillonnage successives.

10. Dispositif selon la revendication 8, caractérisé en ce qu'il comprend un comparateur programmé (17) analysant la position du pic de la fonction de corrélation et commandant la mise en service de l'un d'au moins de deux seconds capteurs ($3_1$–$3_2$) situés à des distances fixes différentes (D, d) du premier capteur (2) et reliés à la voie directe (7).

11. Dispositif selon la revendication 8, caractérisé en ce que le comparateur programmé (17) limite le calcul, par ce comparateur, de la fonction de corrélation à une fenêtre de retard (F) centrée sur le pic (P) de ladite fonction.

12. Dispositif selon l'une des revendications 8 à 10, caractérisé en ce que le comparateur programmé (17) est associé à un filtre (29) prédicteur du centrage d'une fenêtre de retard par rapport au pic de la fonction de corrélation.

**Patentansprüche**

1. Verfahren zur Echtzeitkorrelationsmessung der Verzögerungen zwischen statistisch ähnlichen elektrischen Signalen von der Art, bei der mit einer gegebenen Probenahmefrequenz der Abgriff der Änderung eines von einem vor einem ersten festen Aufnehmer vorbeilaufenden beweglichen Körper gelieferten ersten Signals, die Speicherung der so genommenen Proben in einem Verzögerungskanal, mit derselben Probenahmefrequenz der Abgriff durch einen direkten Kanal der Änderung eines von demselben vor wenigstens einem zweiten festen, in einem bestimmten Abstand vom ersten Aufnehmer liegenden zweiten Aufnehmer vorbeilaufenden beweglichen Körper gelieferten zweiten Signals, die Berechnung der Korrelationsfunktion ausgehend von den in dem Verzögerungs- und direkten Kanal enthaltenen Proben, die Bestimmung der Position des Peaks dieser Funktion und die Messung der Verzögerung zwischen den statistisch ähnlichen Signalen verwendet wird, dadurch gekennzeichnet, dass:

- n parallele, unabhängige, dem ersten Abgriffaufnehmer des ersten Signals zugeordnete Verzögerungskanäle vorgesehen werden, wobei n gleich oder grösser als zwei ist,
- in diesen Kanälen genommene Proben des Signals mit n unterschiedlichen Probenahmefrequenzen gespeichert werden,
- von dem zweiten Aufnehmer ausgegebene Proben des zweiten Signals durch den direkten Kanal gemäss einer der n Frequenzen genommen werden,
- und die Korrelationsfunktion zwischen den Proben des direkten Kanals und den Proben eines der Verzögerungskanäle gemäss dem Wert der gemessenen Verzögerung berechnet wird.

2. Verfahren nach Anspruch 1, dadurch gekennzeichnet, dass der Verzögerungswert durch eine programmierte Vergleichsrechenvorrichtung mitberechnet wird, durch diese Vorrichtung die Probenahmefrequenz des direkten Kanals mit der Frequenz eines der Verzögerungskanäle synchronisiert wird und dieser synchronisierte Verzögerungskanal mit den Mitteln zur Berechnung der Korrelationsfunktion verbunden wird.

3. Verfahren nach Anspruch 1 oder 2, dadurch gekennzeichnet, dass die Proben des ersten Signals gemäss zwei geeigneten Probenahmefrequenzen mit zwei Kanälen abgenommen werden, die Verzögerungskanäle sind und durch die Rechenvorrichtung ausgehend von wenigstens drei Probenahmefrequenzen ausgewählt worden sind.

4. Verfahren nach Anspruch 2 oder 3, dadurch gekennzeichnet, dass die Berechnung der Korrelationsfunktion auf ein Verzögerungsfenster begrenzt wird und dass dieses Fenster auf der Position des Peaks der zu berechnenden Funktion zentriert wird.

5. Verfahren nach Anspruch 4, dadurch gekennzeichnet, dass zur Zeit einer Messung die Zentrierung des Fensters durch die Rechenvorrichtung ausgehend von der Position des von der vorhergehenden Messung gelieferten Peaks ausgeführt wird.

6. Verfahren nach Anspruch 4, dadurch gekennzeichnet, dass die Zentrierung des Fensters mittels eines Voraussagefilters ausgeführt wird.

7. Verfahren nach Anspruch 1, dadurch gekennzeichnet, dass die Änderung des zweiten Signals ausgehend von einem durch die Rechenvorrichtung abhängig von dem gemessenen Verzögerungswert ausgewählten beliebigen von mehreren Aufnehmern abgegriffen wird.

8. Vorrichtung zur Echtzeitkorrelationsmessung der Verzögerung zwischen statistisch ähnlichen Signalen von der Art, aufweisend einen Kopf (1) umfassend für die Messung des linearen Vorbeilaufens eines beweglichen Körpers (4), eine erste Einrichtung zur Emission eines auftreffenden Strahlenbündels, einen ersten Aufnehmer (2) für das durch den beweglichen Körper rückgestreute Bündel, der ein erstes elektrisches Signal ausgibt, wenigstens eine zweite Einrichtung zur Emission eines auftreffenden Strahlenbündels, einen zweiten Aufnehmer (3) für das von dem beweglichen Körper rückgestreute Bündel, der ein zweites elektrisches Signal ausgibt und mit bekanntem Abstand vom ersten Aufnehmer liegt, einen Probenahmegenerator (11) der ersten und zweiten elektrischen Signale, die von dem ersten und zweiten Aufnehmer ausgegeben worden sind, einen Kanal (5) zum Speicher der ausgegebenen aufeinanderfolgenden Proben des ersten Signals, einen Kanal (7), im folgenden direkter Kanal genannt, zur direkten Berechnung der ausgegebenen aufeinanderfolgenden Proben des zweiten Signals, eine Multiplikationseinheit (8) der Proben, eine Additionseinheit (20), die einen Speicher zur Zwischenspeicherung (19) versorgt, und einen Detektor (18) für den Peak der durch die Multiplikations- und Additionseinheiten berechnete Korrelationsfunktion, dadurch gekennzeichnet, dass sie aufweist:

- n Kanäle (5a–5b), nachfolgend Verzögerungskanäle genannt, zur Verzögerungsspeicherung, die dem ersten Aufnehmer zugeordnet sind, wobei n gleich oder grösser als zwei ist,
- einen Generator (11) für n unterschiedliche Probenahmefrequenzen, die jeweils gleichzeitig auf einen der Verzögerungskanäle (5a, 5b) angewendet werden,
- Synchronisationseinrichtungen (15), um auf den direkten Kanal (7) die Probenahmefrequenz eines der Verzögerungskanäle (5a, 5b) anzuwenden,
- Umschalteinrichtungen (9) zur Anwendung der in einem der Verzögerungskanäle (5a, 5b) gespeicherten Proben aus einem der Eingänge der Rechenheit (8),
- und einen programmierten Datenkomparator (17), der einen mit dem Ausgang des Peakdetektors (18) verbundenen Eingang und die Synchronisationseinrichtungen (15), die Umschalteinrichtungen (9) sowie die Berechnung der Korrelationsfunktion steuernde Ausgänge besitzt.

9. Vorrichtung nach Anspruch 8, dadurch gekennzeichnet, dass sie einen Generator (11) für wenigstens drei Frequenzen, Auswahleinrichtungen (24) zur gleichzeitigen Anwendung von zwei aufeinanderfolgenden dieser drei Frequenzen, jeweils mit einem Verzögerungskanal (5a, 5b), und einen programmierten Komparator (17) aufweist, der die Position des Peaks der Korrelationsfunktion analysiert und Einrichtungen (24) zur Auswahl von zwei aufeinanderfolgenden Probenahmefrequenzen steuert.

10. Vorrichtung nach Anspruch 8, dadurch gekennzeichnet, dass sie einen programmierten Komparator (17) aufweist, der die Position des Peaks der Korrelationsfunktion analysiert und die Inbetriebnahme des einen von wenigstens zwei zweiten Aufnehmern ($3_1$–$3_2$) steuert, die mit verschiedenen festen Abständen (D–d) vom ersten Aufnehmer (2) liegen und mit dem direkten Kanal (7) verbunden sind.

11. Vorrichtung nach Anspruch 8, dadurch gekennzeichnet, dass der programmierte Komparator (17) die Berechnung durch diesen Komparator der Korrelationsfunktion auf ein auf den Peak (P) der Funktion zentriertes Verzögerungsfenster (F) begrenzt.

12. Vorrichtung nach einem der Ansprüche 8 bis 10, dadurch gekennzeichnet, dass der programmierte Komparator (17) einem Voraussagefilter (29) für die Zentrierung eines Verzögerungsfensters in bezug auf den Peak der Korrelationsfunktion zugeordnet ist.

## Claims

1. Method for measuring by correlation, in real time, the delays between statistically matching electrical signals, of the type consisting in sampling, at a given sampling frequency, the variation of a first signal supplied by an object moving in front of a first fixed point, in storing in one delay line the resulting samples, in sampling in a direct line at the same sampling frequency, the variations of a second signal supplied by the same object moving in front of at least a fixed second point situated at a predetermined distance from said first point, in calculating the correlation function from the samples contained in the delay and direct lines, in determining the position of the peak of said function and in measuring the corresponding delay between the statistically similar signal, characterized in that:
– n independent delayed lines, which are connected in parallel, are provided for receiving said first signal at said first point, n being equal or greater than two,
– samples of said first signal taken at n different sampling frequencies are stored in said n delayed lines respectively,
– samples of said second signal are taken in the direct line at one of said n frequencies, and
– the correlation function between the samples of the direct line and the samples of one of said n independent delay lines is calculated, said one of said n independent delay lines being determined as a function of the value of the measured delay.

2. Method according to claim 1, characterized in that the value of the delay is taken into account by a programmed computing and comparing device, said device being used for synchronizing the sampling frequency of the direct line with the frequency of one of the delay lines and said synchronized delay line being connected to the correlation function computing means.

3. Method according to claim 1 or 2, characterized in that said first signal is sampled in two sampling frequencies specific of two delay lines and selected by the computing device from at least three sampling frequencies.

4. Method according to claim 2 or 3, characterized in that the calculation of the correlation function is restricted to a delay window and said window is centered on the position of the peak of the function to be calculated.

5. Method according to claim 4, characterized in that during measurement, centering of the window is performed by the computing device from the position of the peak given by the preceding measurement.

6. Method according to claim 4, characterized in that centering of the window is performed by means of a predicting filter.

7. Method according to claim 1, characterized in that the variation of the second signal is sampled from any one of a plurality of sensors selected by the computing device as a function of the measured delay value.

8. Device for measuring by correlation, in real time, the delays between matching electrical signals, comprising a measuring head (1) having for measuring the continuous linear movement of a movable object, a first means of emission of an incident light beam, a first sensor (2) of the beam retro-diffused by the movable object emitting a first electric signal, at least a second means of emission of an incident light beam, a second sensor (3) of the beam retro-diffused by the movable object, emitting a second electric signal and situated at a known distance from the first sensor, a generator (11) for sampling the first and second electric signals emitted by the first and second sensors, a storing line (5) for the successive samples issued from the first signal, a storing line (5) for the successive samples issued from the first signal, a line (7) hereinafter called direct line for directly processing successive samples issued from the second signal, a module (8) for multiplying the samples, an adder module (20) supplying a temporary storage memory (19), and a peak detector (18), for detecting the correlation function calculated by said adder and mutliplier, characterized in that said device comprises:
– n lines (5a–5b) of delayed storage hereinafter called delayed lines, associated with the first sensor, n being equal or greater than two,
– a generator (11) of n different sampling frequencies being simultaneously applied to said n delay lines (5a, 5b),
– synchronization means (15) for applying to the direct line (7) the sampling frequency of one of the delay lines (5a, 5b)
– switching means (9) for applying to one of the inputs of the multiplier module (8), the samples stored in one of the delay lines (5a, 5b),
– and a programmed data comparator (17) having an input connected to the output of the peak detector (18) and outputs controlling the synchronization means (15), the switching means (9), as well as the calculation of the correlation function.

9. Device according to claim 8, characterized in that it comprises a generator (11) of at least three frequencies, selection means (24) for applying two successive of said three frequencies at the same time, each one being applied to a different delay line (5a, 5b), and a programmed comparator (17) analyzing the position of the peak of the correlation function and controlling means (24) for selecting two successive sampling frequencies.

10. Device according to claim 8, characterized in that it comprises a programmed comparator (17) analyzing the position of the peak of the correlation function and controlling the switching on of one, at least of two second sensors $(3_1-3_2)$

situated at different fixed distances (D–d) from the first sensor (2) and connected to the direct line (7).

11. Device according to claim 8, characterized in that the programmed comparator (17) limits the calculation of the correlation function by the calculator to a delay window (F) centered on the peak (P) of said function.

12. Device according to one of claims 8 to 10, characterized in that the programmed comparator (17) is associated with a predicting filter (29) for centering a delay window with respect to the peak of the correlation function.

Fig. 1

Fig. 3

Fig. 2

Fig. 4

# Fig. 5

# Fig. 6